# EUROPÄISCHE PATENTANMELDUNG

(11) **EP 4 202 357 A1**
(43) Veröffentlichungstag der Anmeldung: **28.06.2023**
(21) Anmeldenummer: 22214891.8
(22) Anmeldetag: 20.12.2022
(51) Int. Cl.: G01B 11/06

(54) **THZ-MESSVERFAHREN UND THZ-MESSVORRICHTUNG ZUM VERMESSEN EINES WELLROHRES**

(30) Priorität: 22.12.2021 DE 102021134222
(71) Anmelder: CiTEX Holding GmbH, 49324 Melle (DE)
(72) Erfinder: Petermann, Jan Hendrik, 49328 Melle (DE)
(74) Vertreter: Bremer, Ulrich

(57) **Zusammenfassung**

Die Erfindung betrifft ein THZ-Messverfahren und eine THZ-Messvorrichtung zur Vermessung von Wellrohren (8-1, 8-2) mit unterschiedlichen Durchmessern (D1, D2), Wellenbreiten (W1, W2) und Talbreiten (T1,T2), bei dem
- ein Wellrohr (8-1, 8-2) entlang einer Förderrichtung (F) entlang einer Symmetrieachse (A) durch einen Messraum (9) einer THz-Messvorrichtung (1) gefördert und in einer Messebene senkrecht zur Symmetrieachse (A) kontinuierlich vermessen wird,
- mindestens eine Transceiver-Einheit (2) THz-Strahlung (5) entlang ihrer optischen Achse (B) in den Messraum (9) in Richtung auf die Symmetrieachse (A) ausgibt, als konvergentes Strahlenbündel (15) bündelt und reflektierte THz-Strahlung detektiert,
wobei eine Brennweite (f) des Strahlenbündels (15) kleiner ist als ein Messabstand (L) der Transceiver-Einheit (2) gegenüber der Symmetrieachse (A),
- wobei das Strahlenbündel (15) den Messfleck (6) derartig ausbildet, dass das Strahlenbündel (15) zeitweise auf Täler (11) und Wellen (10) des transportierten Wellrohrs (8-1, 8-2) gebündelt wird, ohne die benachbarten Wellen (10) und Täler (11) zu erfassen,
- Schichtdicken der Wellen (10) und Täler (11) des durch den Messraum (9) entlang der Förderrichtung (F) geförderten Wellrohrs (8-1, 8-2) ermittelt werden.

## Beschreibung

Die Erfindung betrifft ein THz-Messverfahren und eine THz-Messvorrichtung zum Vermessen eines Wellrohres.

Wellrohre aus Kunststoff oder anderen thermoplastischen Materialien weisen eine Struktur aus alternierenden Wellen und Tälern, ggf. mit zusätzlichen Strukturen auf und dienen insbesondere zur Verlegung von Leitungen und Kabeln und auch zum Transport von Fluiden. Durch die Wellung weisen die Wellrohre eine hohe Biegsamkeit und Flexibilität bei dennoch hoher Steifigkeit gegenüber einwirkenden Kräften, insbesondere Belastungen senkrecht zu ihrer Längsachse, auf. Wellrohre zum Transport von Fluiden weisen im Allgemeinen ein durchgängiges Innenrohr auf, so dass zwischen einer Welle (Berg) und dem Innenrohr eine Luftkammer ausgebildet ist. Die Wellen und Täler können insbesondere in Umfangsrichtung umlaufend oder auch schraubenförmig sein. Die Wellrohre mit ihren Strukturen werden im Allgemeinen durch einen Extruder und einen nachfolgenden, Wellform-gebenden Corrugator ausgebildet. Eine Vermessung von Wellrohren ist im Allgemeinen komplex, da die Strukturen in unterschiedlichen Abständen von der Rohrachse ausgebildet sind.

THz-Vermessungen von Rohren ermöglichen eine berührungsfreie Vermessung von Abständen, Durchmessern, Schichtdicken und Strukturen, indem ein THz-Strahl gebündelt wird und durch das Rohr gelangt, wobei er an Grenzflächen des Rohrmaterials reflektiert wird. Hierzu wird, wie in WO 20161/39155 A1 gezeigt, im Allgemeinen der THz-Sendestrahl auf eine Rohrachse des Rohres fokussiert, um z. B. eine Vermessung eines vorderen und hinteren Wandbereichs des Rohres zu ermöglichen.

DE 10 2020 133 704 A1 beschreibt eine THz-Messvorrichtung und ein entsprechendes Verfahren zum Vermessen eines Wellrohres: durch ein derartiges System kann insbesondere ein Rohr mit spezifischem Innendurchmesser und Außendurchmesser vermessen werden.

DE 10 2019 108 299 A1 und DE 10 2018 124 175 A1 zeigen weitere THz-Messverfahren und THz-Messvorrichtungen. WO 2016/139155A1 zeigt ein Verfahren und eine Vorrichtung zum Messen eines Durchmessers und/oder einer Wanddicke eines Stranges, wobei ein Reflektor einem THz- Emitter gegenüberliegend und hinter dem Strang angeordnet ist und einfallende Strahlung zurück zu dem THz-Emitter reflektiert.

Der Erfindung liegt die Aufgabe zugrunde, ein THz-Messverfahren und eine THz-Messvorrichtung zu schaffen, die sichere Vermessungen von durchlaufenden Wellrohren mit geringem Aufwand ermöglichen.

Diese Aufgabe wird durch ein THz-Messverfahren und eine THz-Messvorrichtung nach den unabhängigen Ansprüchen gelöst. Die Unteransprüche beschreiben bevorzugte Weiterbildungen.

Die erfindungsgemäße THz-Messvorrichtung ist insbesondere zur Durchführung eines erfindungsgemäßen THz-Messverfahrens vorgesehen. Das erfindungsgemäße THz-Messverfahren kann insbesondere mit einer erfindungsgemäßen THz-Messvorrichtung ausgeführt werden.

Somit ist mindestens eine Transceiver-Einheit vorgesehen, die einen THz-Transceiver und eine vorgeschaltete Linse aufweist. Der THz-Transceiver kann eine direkte Laufzeitmessung, weiterhin auch eine Frequenzmodulation des THz-Sendestrahls vornehmen, und/oder gepulste THz-Strahlung ausgeben. Die Frequenz der THz-Strahlung kann im GHz- und THZ-Bereich, z. B. im Bereich von 10 GHz bis 50 THz, insbesondere 20 GHz bis 10 THz, insbesondere 50 GHz bis 10 THz, liegen. Somit kann die THz-Strahlung auch im Frequenzbereich von Mikrowellenstrahlung, Millimeterwellen- und/oder Radarstrahlung liegen.

Gemäß einer bevorzugten Ausbildung wird ein FMCW-Radar eingesetzt, das einen kontinuierlichen, frequenzmodulierten Sendestrahl ausgibt.

Als THz-Transceiver wird eine Kombination aus einem THz-Sender (THz-Transmitter) und einem THz-Empfänger (THz-Receiver) bezeichnet, wobei diese als gemeinsame bauliche Einheit, z. B. kombinierter Schwingkreis, ausgebildet sein können, jedoch auch mit getrennter Ausbildung von Sender und Empfänger, z. B. mit Kopplung durch einen halbdurchlässigen Spiegel.

Somit wird ein Wellrohr entlang einer Symmetrieachse der THz-Messvorrichtung gefördert und durch die THz-Messvorrichtung kontinuierlich vermessen. Die THz-Messvorrichtung weist hierbei ein Gehäuse und mindestens eine Transceiver-Einheit auf, die mit ihrer optischen Achse auf die Symmetrieachse gerichtet ist und die THz-Strahlung als konvergentes Strahlenbündel ausgibt, wobei die Brennweite, d. h. der Abstand eines Messflecks bzw. Brennflecks von der Transceiver-Einheit, vorteilhafterweise kleiner ist als ein Messabstand der Transceiver-Einheit von der Symmetrieachse. Somit wird das Strahlenbündel bereits vor Erreichen der optischen Achse auf den Brennfleck bzw. Messfleck fokussiert.

Als Messabstand wird hierbei ein Abstand der Transceiver-Einheit von der Symmetrieachse bezeichnet, der entsprechend als Systemabstand, d.h. Abstand zum Systemzentrum, bezeichnet werden kann.

Gemäß einer bevorzugten Ausbildung ist ein besonderes Verhältnis von Brennweite zu Messabstand vorgesehen, das somit eine geeignete Strahlengeometrie beschreibt. Hierbei ist vorzugsweise ein Verhältnis von Brennweite zu Messabstand im Bereich von mindestens 60 Prozent vorgesehen, vorzugsweise mindestens 75 Prozent, insbesondere mindestens 80%.

Das Verhältnis von Brennweite zu Messabstand kann z.B. im Bereich von 60 bis 90 Prozent liegen, insbesondere im Bereich von 75 bis 90 Prozent, z.B. bei 80 bis 90 Prozent.

Somit kann ein schmales Strahlenbündel ausgebildet werden, das eine vorteilhafte Vermessung von Wellen und Tälern typischer Wellrohre unterschiedlicher Größe ermöglicht, ohne Fokussierung oder Änderung des Messabstandes, da insbesondere auch größere Wellrohre größere Strukturierungen aufweisen.

Alternativ oder ergänzend kann die Strahlengeometrie auch durch den Konvergenzwinkel des ausgesandten Strahlenbündels beschrieben werden, d.h. den Öffnungswinkel des Strahlenbündels gegenüber der optischen Achse. Hier zeigt sich, dass erfindungsgemäß vorteilhafterweise ein Konvergenzwinkel von 1° bis 5°, z.B. 1° bis 4°, vorzugsweise 1.5° bis 3°, z.B. im Bereich von 1.8 bis 2.3 ° ausgebildet wird, der das geeignete, schmale Strahlbündel beschreibt.

Somit wird insbesondere eine Messvorrichtung und/oder ein Messverfahren geschaffen, bei dem ein Verhältnis von Brennweite zu Messabstand im Bereich von mindestens 60 Prozent, vorzugsweise mindestens 75 Prozent, insbesondere mindestens 80 Prozent liegt, und/oder - ein Konvergenzwinkel von 1 Grad bis 5 Grad, z.B. 1 Grad bis 4 Grad, vorzugsweise 1.5 Grad bis 3 Grad, z.B. im Bereich von 1.8 bis 2.3 Grad ausgebildet wird.

Die Strahlengeometrie kann statt durch den Konvergenzwinkel auch durch die numerische Apertur beschrieben werden. Diese Beschreibung ist vorteilhaft, da sie den Brechungsindex des Linsenmaterials einbezieht. Die numerische Apertur ergibt sich entsprechend als Sinus des Konvergenzwinkels in Luft.

Durch das schmale konvergente Strahlenbündel ist eine Vermessung eines Wellrohres mit seinen Tälern und Wellen möglich, bei dem die Wellen und Täler separat erfasst werden können, ohne durch das benachbarte Tal bzw. die benachbarte Welle beeinflusst zu werden. Somit können die Strukturwerte, d.h. insbesondere Schichtdicken der Wellen und Täler, entlang der Förderrichtung bzw. der Symmetrieachse, sauber getrennt und ermittelt werden. Insbesondere können Wellrohre unterschiedlichen Durchmessers mit einer festen Strahlengeometrie, d.h. insbesondere ohne Fokussierung auf die Rohroberfläche und ohne Verstellung des Messabstandes, vermessen werden.

Als Schichtdicken bzw. Strukturierung in radialer Richtung des Wellrohrs können insbesondere ermittelt werden:
eine Talwanddicke der Täler des Wellrohrs,
eine Wellenwanddicke der Wellen des Wellrohrs,
bei einem Rohr mit geschlossenen Hohlkammern bzw. mit einem Innenrohr eine Wellenaußenwanddicke und/oder Welleninnenwanddicke,
eine Wellenhöhe der Wellen gegenüber den Tälern bzw. eine Höhe der Hohlkammern.

Weiterhin können Strukturbreiten, d. h. Wellenbreiten und Talbreiten ermittelt werden, indem
- die Messabstände der einzelnen Strukturen des Wellrohrs gegenüber der Transceiver-Einheit ermittelt werden, d.h. als Abstände in der Messebene,
- und die Wellenhöhe als Differenz des Messabstandes einer Welle zu dem Messabstand eines Tals ermittelt wird;
- weiterhin können Innen- und Außendurchmesser bestimmt werden.

Hierbei zeigt sich, dass insbesondere die Wahl eines Materials der Linse mit hohem Brechungsindex, insbesondere einem Brechungsindex von n > 1,7, z. B. im Bereich von 1.7 bis 2,1, insbesondere 1.7 bis 2.0, vorzugsweise 1,8 bis 2,0, jeweils in dem Frequenzbereich der ausgesandten THz-Strahlung, vorteilhaft ist, da bei Verwendung eines derartigen Materials mit großen Brechungsindex die Ausbildung eines Messflecks mit kleinem Messfleck-Durchmesser möglich ist.

Die Strahlengeometrie kann durch die geeignete numerische Apertur geeignet festgelegt werden, wobei hierfür wiederum der hohe Brechungsindex des Materials der Linse vorteilhaft ist, um die von dem Transceiver ausgegebene Strahlung

Hierbei wird erfindungsgemäß insbesondere erkannt, dass die Größe des Messflecks von der Apertur, d. h. dem Durchmesser der Linse, der Brennweite und auch dem Brechungsindex des Materials abhängt. Somit kann durch die Wahl eines geeigneten Materials eine geeignete Strahlengeometrie ausgebildet werden, die eine sichere und hinreichende Vermessung von Wellrohren ermöglicht. Bei Einsatz einer Linse mit einem hohen Brechungsindex kann insbesondere der THz-Transceiver als FMCW-Radarsensor ausgebildet sein, der als Dipol bzw. Schwingkreis eine weite Abstrahl-Charakteristik bzw. einen weiten Abstrahl-Winkel aufweist,
so dass die Linse trotz des weiten Abstrahl-Winkels eine Fokussierung und Bündelung auf die Strukturen des Wellrohres ermöglicht.

So wird erfindungsgemäß erkannt, dass es problematisch ist, für die Auswahl eines geeigneten Strahlenbündels einen üblichen geringeren Brechungsindex einzusetzen und die Strahlung durch z.B. eine kleinere Apertur zu begrenzen, um eine Auflösung der Strukturen des Wellrohrs, zu erreichen, insbesondere auch, da eine kleine Apertur kein geeignetes schmales Strahlenbündel erzeugen wird und der Strahl insbesondere nach zu kurzer Strecke nach der Apertur wieder konvergiert. Die Apertur ist hierbei die die Strahlung begrenzende Öffnung der Optik, wobei an der Apertur grundsätzlich der Effekt der Beugung der Strahlung auftritt, insbesondere, da die THz-Strahlung relativ langwellig ist, insbesondere im Vergleich z.B. zu optischer Strahlung. Somit tritt bei der THz-Strahlung an den Kanten der Apertur grundsätzlich relevantere Beugung auf.

Durch den Einsatz des Materials der Linse bzw. Optik mit hohem Brechungsindex können derartige Probleme vermieden bzw. gering gehalten werden. So können bei einem Material mit größerem Brechungsindex größere Aperturen eingesetzt werden, die keine so relevanten Beugungseffekte ausbilden, so dass die Auflösung der Strukturen des Wellrohrs, d.h. insbesondere die getrennte Erfassung von Wellen und Tälern, somit verbessert ist und nicht in relevantem Ausmaß von Beugungseffekten beeinträchtigt wird. Als Material der Linse kann insbesondere ein Siliziumdioxid-haltiges Material, vorzugsweise Quarz-Glas eingesetzt werden, das einen Brechungsindex zwischen 1,8 und 2, z.B. 1,995 aufweist, da ein derartiges Quarz-Glas sehr vorteilhafte Eigenschaften aufweist; neben dem hohen Brechungsindex erfolgt auch eine geringe Absorption, wobei grundsätzlich Verfahren zur Herstellung von Linsen mit Quarz-Glas für andere Linsenformen bei optischen Geräten wie Lasern und Lichtquellen im optischen Bereich bereits bekannt sind. Quarz-Glas wird hingegen bei Terahertz-Strahlung, insbesondere auch bei THz-Messvorrichtungen, zur Vermessung von Abständen in der Produktion bei durchlaufenden, kontinuierlich geförderten Messobjekten, bisher nicht eingesetzt.

Der Messabstand kann z.B. zwischen 200 mm und 1300 mm liegen, die Linse kann z.B. einen Durchmesser von 60 bis 90 mm, z.B. etwa 85 mm aufweisen, um eine geeignete Strahlengeometrie zu schaffen.

Somit wird mit geringem Aufwand eine sichere Vermessung ermöglicht.

Vorzugsweise können Wellrohre mit unterschiedlichem Durchmesser und unterschiedlichen Strukturbreiten mit derselben THz-Messvorrichtung vermessen werden, ohne die Fokussierung zu ändern, d.h. die Transceiver-Einheiten oder Linsen relativ zu der Symmetrieachse nachzuführen. Hierbei wird erkannt, dass Wellrohre mit unterschiedlichen Durchmessern im Allgemeinen auch unterschiedliche Strukturbreiten aufweisen derartig, dass ein Wellrohr mit größerem Durchmesser auch größere Strukturbreiten, d. h. größere Talbreiten und größere Wellenbreiten aufweist, da die Ausbildung kleinerer Strukturbreiten zum einen mehr Material erfordert und weiterhin die Flexibilität bzw. Verstellbarkeit verringert, so dass für unterschiedliche Wellrohre ein gemeinsames geeignetes konvergentes Strahlenbündel ausgebildet werden kann.

Indem die Transceiver-Einheiten mit festem Messabstand der Transceiver-Einheiten zur Symmetrieachse, d.h. ohne aktive Fokussiereinrichtung bzw. Verstellung in radialer Richtung relativ zur Symmetrieachse ausgebildet sind, kann die THz-Messvorrichtung mit geringem Kostenaufwand und stabil ausgebildet werden. Die Messwerte sind somit eindeutig und reproduzierbar, da sie nicht von der genauen Einstellung von Längenmaßen abhängig sind. Weiterhin entfällt die jeweilige Anpassung unterschiedlicher Wellrohre. Es können insbesondere durch eine gemeinsame THz-Messvorrichtung unterschiedliche Wellrohre gefördert und vermessen werden, ohne die Einstellungen zu ändern.

Grundsätzlich kann eine Verstellung der gesamten THz-Messvorrichtung, d. h. des Gehäuses mit den ein oder mehreren THz-Transceivern relativ zum Messobjekt, d. h. in der Messebene, erfolgen, z. B. durch einen sogenannten Kreuztisch, der eine translatorische Verstellung der Messvorrichtung in der Messebene relativ zu dem Messobjekt, das durch eine separate Fördereinrichtung gefördert wird, ermöglicht.

Gemäß einer vorteilhaften Ausbildung sind mehrere THz-Transceiver mit gleicher Brennweite, insbesondere mit gleichen THz-Transceiver-Einheiten, an dem gemeinsamen Gehäuse in Umfangsrichtung um den Messraum angeordnet und auf die gemeinsame Symmetrieachse ausgerichtet, wodurch vorteilhafterweise eine vollumfängliche Vermessung eines aufgenommenen Wellrohrs, d. h. insbesondere von Wellrohren mit unterschiedlichen Durchmessern und Strukturbreiten, ermöglicht wird.

Gemäß einer hierzu alternativen Ausbildung sind ein oder mehrere Transceiver-Einheiten an dem Gehäuse in Umfangsrichtung rotierend, d. h. vollumfänglich umlaufend, oder auch innerhalb eines Winkelbereichs reversierend, d. h. hin- und herschwenkend, vorgesehen, jeweils mit konstantem Messabstand der Transceiver-Einheiten zur Symmetrieachse.

Somit ist grundsätzlich auch gemäß einer Ausbildung ein Verfahren vorgesehen, bei dem während der Vermessung des Wellrohrs die mindestens eine Transceiver-Einheit in Umfangsrichtung um die Symmetrieachse rotiert oder reversiert, bei festem Messabstand.

Entsprechend ist gemäß einer Ausbildung eine Messvorrichtung vorgesehen, bei der eine oder mehrere Transceiver-Einheit(en) in Umfangsrichtung umlaufend um die Symmetrieachse an dem Gehäuse der Vorrichtung angeordnet sind und ein Rotations-Antrieb vorgesehen ist, der ausgebildet ist, die eine oder mehreren Transceiver-Einheit(en) fortlaufend
- um die Symmetrieachse zu rotieren oder
- reversierend entlang eines Bogenabschnitts um die Symmetrieachse hin- und herzuschwenken.

Vorzugsweise sind die Abstände gegenüberliegender Transceiver-Einheiten vorbekannt oder werden vorab durch eine Kalibriermessung bei leerem Messraum ermittelt. Vorteilhafterweise werden zusätzlich zu den Strukturwerten auch Materialangaben bzw. der Brechungsindex des Materials des Wellrohres ermittelt, insbesondere auf Grundlage einer Kalibriermessung bei leerem Messraum und nachfolgender Messung mit aufgenommenem Wellrohr.

Gemäß einer Weiterbildung kann ergänzend zu den Transceiver-Einheiten eine Abstandsmessung mittels einer Detektionseinrichtung erfolgen, bei der eine Position oder ein Abstand einer Außenfläche des Wellrohrs detektiert wird, z. B. mittels einer Laser-Messeinrichtung bzw. LIDAR, weiterhin auch wiederum mittels eines Radars, insbesondere eines FMCW-Radars. Diese Messung dient somit lediglich der Erfassung der Außenfläche und des Abstandes, nicht der oben beschriebenen Ermittlung der Strukturen der aufgenommenen Wellrohre. Eine derartige Detektion mit lediglich der Ermittlung der Außenfläche des Wellrohres ermöglicht bereits eine eindeutige Zuordnung und Erkennung von Strukturpositionen. Grundsätzlich ist eine zusätzliche derartige Detektionseinheit jedoch nicht erforderlich.

Erfindungsgemäß können insbesondere Wellrohre mit einem Innendurchmesser ab 150 mm und bis zu einem Außendurchmesser von 1.800 mm, oder in einem Zwischenbereich dazwischen vermessen werden. Gemäß einer vorteilhaften Ausbildung werden Wellrohre mit einem Innendurchmesser zwischen 150 mm bis zu einem Außendurchmesser von 1.200 mm, oder in einem Zwischenbereich vermessen. Gemäß einer hierzu vorzugsweisen Ausbildung werden Wellrohre mit einem Innendurchmesser ab 500 mm bis zu einem Außendurchmesser von 1.800 mm, oder einem Zwischenbereich vermessen.

Somit können im industriellen Bereich übliche Dimensionierungen von Wellrohren mit einer einzigen THz-Messvorrichtung detektiert und genau vermessen werden. Die ermittelten Wellen- und Talbreiten sowie Wellenhöhen können mit Grenzwerten verglichen werden, und bei Überschreiten eines Grenzwertes kann ein Fehlersignal ausgegeben werden.

Die Erfindung wird im Folgenden anhand der beiliegenden Zeichnungen an einer Ausführung näher erläutert. Es zeigen:
- Fig. 1: eine Transceiver-Einheit bei Vermessung von zwei Wellrohren mit unterschiedlichen Durchmessern und Strukturbreiten;
- Fig. 2: eine Messvorrichtung mit mehreren THz-Transceivern aus Fig. 1 bei Vermessung unterschiedlicher Wellrohre;
- Fig. 3: eine vergrößerte Darstellung bei Vermessung eines Wellrohrs mit Innenrohr.

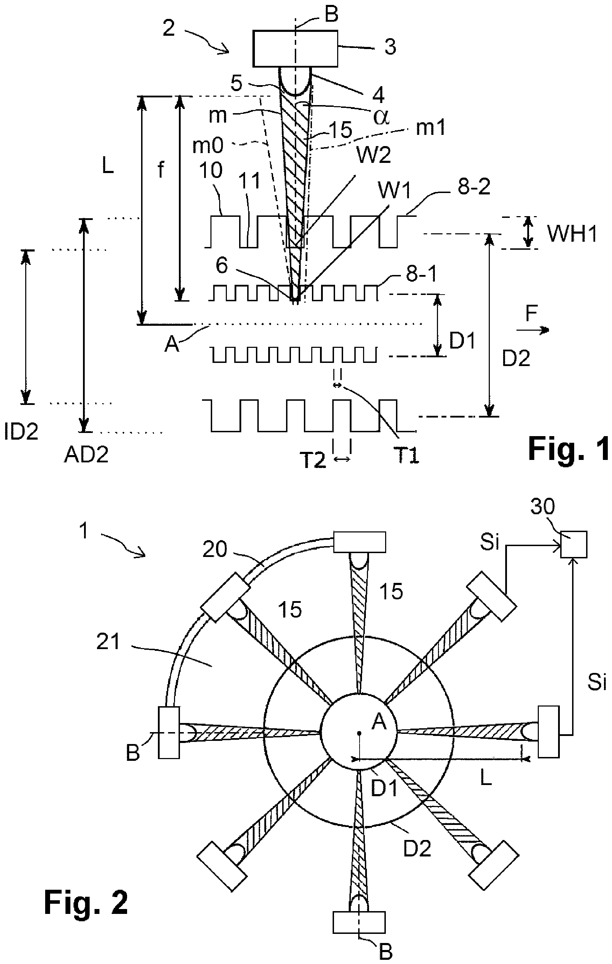

Eine THz-Messvorrichtung 1 weist gemäß Figur 2 mehrere kreisförmig um eine Symmetrieachse A angeordnete und auf die Symmetrieachse A ausgerichtete Transceiver-Einheiten 2 auf, wobei jede Transceiver-Einheit 2 einen THz-Transceiver 3 und eine vorgeschaltete Linse 4 aufweist. Der THz-Transceiver 3 ist als Sende- und Empfangseinheit ausgebildet und kann gemäß einer vorteilhaften Ausbildung THz-Strahlung 5 kontinuierlich, frequenzmoduliert oder zeitlich unterbrochen bzw. gepulst aussenden. So kann der THz-Transceiver 3 z. B. die THz-Strahlung 5 frequenzmoduliert (frequency modulated continuous wave radar sensor, FMCW sensor) aussenden und reflektierte Strahlung 7 detektieren. Neben vollelektronischen Systemen können auch optische THz-Transceiver mit z. B. Kurzzeit-Lasern eingesetzt werden.

Der THz-Transceiver 3 gibt die THz-Strahlung 5 zunächst in einem weiten Abstrahlwinkel aus; die THz-Strahlung 5 wird nachfolgend von der Linse 4 entlang der optischen Achse B gebündelt. Die Linse 4 ist hierzu halb-konvex bzw. zur Ausstrahlseite hin konvex ausgebildet und bündelt die vom THz-Transceiver 3 ausgesandte THz-Strahlung 5 in einer Brennweite f unter Ausbildung eines Messflecks 6. Die Größe bzw. der Durchmesser d6 des Brennflecks 6 ist unter anderem abhängig von der Apertur, d. h. dem Durchmesser d4 der Linse 4, einem Brechungsindex n4 der Linse 4 und der Brennweite f.

Die THz-Strahlung 5 wird z. B. im Bereich von 50 GHZ bis 4 THz ausgesandt. Die Linse 4 ist aus einem für die THz-Strahlung 5 hochbrechenden Material, d. h. mit einem hohen Brechungsindex n4, ausgebildet, der in diesem Frequenzbereich bei n > 1,7, z. B. n = 1,8 bis 2,0, z. B. n ~ 1,9, liegt. Das Material der Linse 4 kann insbesondere Quarz-Glas sein. Somit wird eine lange Brennweite f und insbesondere ein Brennfleck mit einem kleinen Durchmesser d6 ausgebildet.

Der Messabstand L kann z.B. zwischen 200 mm oder 650 mm als unterem Wert und 1300 mm als oberen Wert liegen, die Linse 4 kann z.B. einen Durchmesser von 60 bis 90 mm, z.B. etwa 85 mm aufweisen, um eine geeignete Strahlengeometrie zu schaffen. Das Verhältnis von Brennweite f zu Messabstand L liegt vorzugsweise im Bereich von mindestens 60 Prozent, insbesondere mindestens 75 Prozent, z.B. mindestens 80.

Die THz-Messvorrichtung 1 dient zum Vermessen von Wellrohren 8 mit unterschiedlichen Durchmessern D1, D2 und Strukturbreiten, d.h. Talbreiten T1, T2 und Wellenbreiten W1, W2. Die Wellrohre weisen umlaufend oder schraubenförmig alternierend Wellen 10 und Täler 11 auf mit einer Rohrachse, die bei idealer Positionierung der Symmetrieachse A entspricht. Die Wellrohre 8 können weiterhin auch ergänzende Strukturen, z. B. Fittings, aufweisen, die entsprechend mit detektiert werden können.

In Figur 1 ist somit ein erstes Wellrohr 8-1 mit kleinerem Durchmesser D1 und kleinerer Strukturbreite, d. h. kleinerer Talbreite T1 und kleinerer Wellenbreite W1 mit seiner Rohrachse auf der Symmetrieachse A vorgesehen, und ein größeres zweites Wellrohr 8-2 mit einem größeren Durchmesser D2 und größerer Strukturbreite, d. h. größerer Talbreite T2 und größerer Wellenbreite W2.

Da die Strukturbreite, d. h. Wellenbreite W und Talbreite T, mit dem Durchmesser abnimmt, kann somit die gezeigte geeignete Bündelung der THz-Strahlung 5 als konvergierendes Strahlenbündel 15 ausgebildet werden derartig, dass bei den gezeigten Wellrohren 8-1 und 8-2 gemäß Fig. 1 jeweils die Täler 11 von dem Strahlenbündel 15 erfasst werden können, ohne dass das Strahlenbündel 15 die benachbarte Welle 10 erfasst, und entsprechend die Welle 10 ohne das benachbarte Tal 11. Hierbei ist in Fig. 1 der Randstrahl m des Strahlenbündels 15 eingezeichnet, und zum Vergleich gestrichelt ein Randstrahl m0 einer herkömmlichen Strahlenoptik ohne die Ausbildung des schmalen, konvergenten Strahlenbündels 15; der herkömmliche Randstrahl m0 schneidet somit die Wellen 10 des größeren Wellrohrs 8-2, oder er ragt nicht bis zu den Tälern 11 des kleineren Wellrohrs 8-1. Ergänzend ist zum Vergleich durch eine strichpunktierte Linie ein Randstrahl m1 eingezeichnet, der sich für einen Strahl bei gleicher Linsengröße aber geringerem Brechungsindex ergibt. Der Strahl gemäß der Linie m1 führt zu einem breiteren Fokus, durch den somit die Strukturen der kleinen Wellrohre 8-1 nicht mehr aufgelöst werden können.

Weiterhin kann die Strahlengeometrie auch durch den Konvergenzwinkel α (alpha) des ausgesandten Strahlenbündels beschrieben werden, d.h. den Öffnungswinkel des Strahlenbündels bzw. des Randstrahls m gegenüber der optischen Achse B. Hier zeigt sich, dass erfindungsgemäß vorteilhafterweise ein Konvergenzwinkel α von 1° bis 5°, z.B. 1° bis 4°, vorzugsweise 1.5° bis 3°, z.B. im Bereich von 1.8 bis 2.3 ° ausgebildet wird, der das geeignete, schmale Strahlbündel 15 beschreibt.

Somit wird die Ausbildung eines Messsignals Si (t) des THz-Transceivers 3 als zeitliche Funktion beim Transport der Wellrohre 8-1 und 8-2 in einer Förderrichtung F möglich, bei denen die Täler 11 zumindest zeitweise allein erfasst werden können und Messpeaks der Täler 11 ohne Beeinflussung der angrenzenden Wellen 10 und entsprechend Messpeaks der Wellen 10 ohne Beeinflussung der angrenzenden Täler 11 ausgebildet werden können. Zwischen diesen Messpeaks werden Zwischenbereiche des Signals Si ausgebildet, in denen das Strahlenbündel 15 sowohl eine Welle 10 als auch das benachbarte Tal 11 erfasst.

Somit können bei Transport des Wellrohres 8-1 oder 8-2 in Förderrichtung F die Messabstände sowohl der Wellen 10 als auch der Täler 11 gegenüber der Transceiver-Einheit 2 entlang der optischen Achse B fortlaufend erfasst werden, und hieraus somit der Außendurchmesser AD und der Innendurchmesser ID, sowie der mittlere Durchmesser D des jeweiligen Wellrohres 8-1 und 8-2 bestimmt werden, bzw. die Wellenhöhe WH1, WH2 als Differenz der Messabstände der Wellen 10 und der Täler 11, direkt aus den Messsignal Si ermittelt werden.

Bei der Vermessung der unterschiedlichen Wellrohre 8-1 und 8-2 ist hierbei eine aktive Fokussierung durch Verstellung des Messabstandes L, d. h. eine Verstellung der Transceiver-Einheiten 2 relativ zur Symmetrieachse A, bei den somit gemäß Figur 2 die einzelnen Transceiver-Einheiten 2 aufeinander zu bzw. voneinander weg bewegt werden, und/oder eine Verstellung der Linsen 4 gegenüber den Transceivern 3 nicht vorgesehen. Die Transceiver-Einheiten 2 sind somit z. B. in einem gemeinsamen Gehäuse 20 starr aufgenommen und werden weder während des Transportes der einzelnen Wellrohre 8-1, 8-2 in der Förderrichtung F, noch bei einem Wechsel des Messobjektes, d. h. der Vermessung des jeweils anderen Wellrohres 8-1 bzw. 8-2, relativ zum Gehäuse 20 verstellt.

Das Gehäuse 20 und somit die gesamte THz-Messvorrichtung 1 können gegenüber dem jeweiligen Wellrohr 8-1, 8-2 verstellt werden, d. h. ohne relative Verstellung der Transceiver-Einheiten 2 zueinander. Dies ist insbesondere bei einem durchbiegenden Wellrohr 8-1 bzw. 8-2 hilfreich, das sich relativ zur Symmetrieachse Ader THz-Messvorrichtung 1 verstellt. Somit wird die THz-Messvorrichtung 1 als Ganzes translatorisch in der gezeigten Messebene der Figur 2 senkrecht zur Symmetrieachse A nachverstellt; dies kann insbesondere durch einen sogenannten Kreuztisch erfolgen.

Aus dem Messsignal Si kann somit festgestellt werden, ob eine ordnungsgemäße Strukturierung, d. h. mit Strukturbreiten aus T1, T2 bzw. W1, W2 und Wellenhöhen WH1, WH2 vorliegt, und ein Fehlersignal und/oder Messignal ausgegeben werden, das auch zur Regelung, d.h. zur Einstellung des Extruders und/oder Corrugators eingesetzt wird.

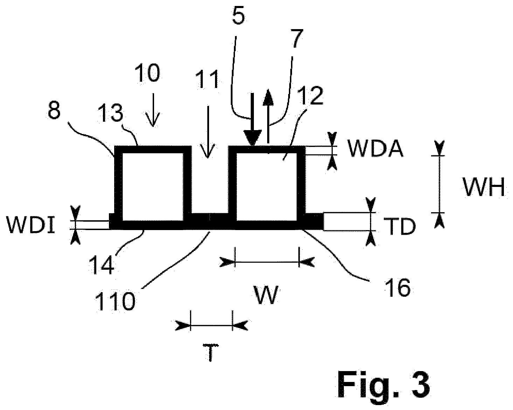

Fig. 3 zeigt die Vermessung eines Wellrohrs 8 in vergrößerter Darstellung, wobei gemäß der hier gezeigten Ausführungsform ein Wellrohr 8 gezeigt ist, bei dem die Wellen 10 geschlossene Hohlkammern 12 ausbilden, d.h. die Welle 10 weist eine Wellenaußenwand 13, eine Welleninnenwand 14 und dazwischen eine Hohlkammer 12 auf. Somit wird bei diesem Wellrohr 8, das insbesondere zum Leiten von Fluiden geeignet ist, ein durchgängiges Innenrohr 16 ausgebildet. Die Darstellung ist entsprechend aber auch für Wellrohre 8 ohne Welleninnenwand 14 anzuwenden.

Gemäß Fig. 3 wird die THz-Strahlung 5 an den Grenzflächen der Schichten reflektiert und die reflektierte Strahlung 7 nachfolgend detektiert. Somit tritt in einem Tal 11 eine Reflexion an der Oberseite und Unterseite der Talwand 110 auf, sodass eine Talwanddicke TD des Wellrohrs 8 als Laufzeitdifferenz bzw. z. B. entsprechend durch Frequenzmodulation ermittelt werden kann.

Weiterhin werden eine Wellenaußenwanddicke WDA und eine Welleninnenwanddicke WDI des Wellrohrs 8 ermittelt, weiterhin kann als Luftschicht eine Wellenhöhe WH ermittelt werden.

Bei einem Wellrohrs 8 ohne Innenrohr 16 werden somit die Talwanddicke TD und die hier gezeigte Wellenaußenwanddicke WDA gemessen, die somit die Wellenwanddicke darstellt.

Die weiteren Strukturparameter W und T können somit ergänzend ermittelt werden.

### Bezugszeichenliste

- 1: THz-Messvorrichtung
- 2: Transceiver-Einheit
- 3: THz-Transceiver
- 4: Linse
- 5: THz-Strahlung
- 6: Brennfleck
- 7: reflektierte Strahlung
- 8: Wellrohr
- 8-1, 8-2: erstes und zweites Wellrohr
- 10: Welle
- 11: Tal
- 12: Hohlkammer
- 13: Wellenaußenwand
- 14: Welleninnenwand
- 15: konvergentes Strahlenbündel
- 16: Innenrohr
- 20: Gehäuse
- 21: Messraum
- 110: Talwand

- A: Symmetrieachse der THz-Messvorrichtung 1, entsprechend der Rohrachse der Wellrohre 8
- AD: Außendurchmesser
- alpha: Konvergenzwinkel
- B: optische Achse der Transceiver-Einheit 2
- d6: Durchmesser des Brennflecks 6
- F: Förderrichtung
- ID: Innendurchmesser
- L: Messabstand der Transceiver-Einheit 2, insbesondere der Linse 4, zu der Symmetrieachse A
- m: Randstrahl
- m0: herkömmlicher Randstrahl ohne die Ausbildung des schmalen, konvergenten Strahlenbündels;
- m1: herkömmlicher Randstrahl bei zu geringem Brechungsindex
- TD: Talwanddicke des Wellrohrs 8
- Si: Messsignal
- WDI: Welleninnenwanddicke des Wellrohrs 8
- WDA: Wellenaußenwanddicke des Wellrohrs 8

- WH1, WH2: Wellenhöhen

## Patentansprüche

1. THz-Messverfahren zur Vermessung von Wellrohren (8, 8-1, 8-2), bei dem
- ein Wellrohr (8, 8-1, 8-2) entlang einer Förderrichtung (F) entlang einer Symmetrieachse (A) durch einen Messraum (9) einer THz-Messvorrichtung (1) gefördert und in einer Messebene senkrecht zur Symmetrieachse (A) kontinuierlich vermessen wird,
- mindestens eine Transceiver-Einheit (2) THz-Strahlung (5) entlang ihrer optischen Achse (B) in den Messraum (9) in Richtung auf die Symmetrieachse (A) ausgibt, als konvergentes Strahlenbündel (15) bündelt und reflektierte THz-Strahlung detektiert,
wobei eine Brennweite (f) des Strahlenbündels (15) kleiner ist als ein Messabstand (L) der Transceiver-Einheit (2) gegenüber der Symmetrieachse (A),
- wobei das Strahlenbündel (15) den Messfleck (6) derartig ausbildet, dass das Strahlenbündel (15) zeitweise auf Täler (11) und Wellen (10) des transportierten Wellrohrs (8, 8-1, 8-2) gebündelt wird, ohne die benachbarten Wellen (10) und Täler (11) zu erfassen,
- Schichtdicken (WDI, WDA, TD, WH1, WH) der Wellen (10) und Täler (11) des durch den Messraum (9) entlang der Förderrichtung (F) geförderten Wellrohrs (8, 8-1, 8-2) ermittelt werden.

2. Verfahren nach Anspruch 1, **dadurch gekennzeichnet, dass** eine oder mehrere der folgenden Schichtdicken (WDI, WDA, TD, WH1, WH) ermittelt werden:
eine Talwanddicke (TD) der Täler (11) des Wellrohrs (8),
eine Wellenaußenwanddicke (WDA) oder Wellenwanddicke der Wellen (10) des Wellrohrs (8),
eine Welleninnenwanddicke (WDI) der Wellen (10) des Wellrohrs (8),
eine Wellenhöhe (WH) der Wellen (10 gegenüber den Tälern (11).

3. Verfahren nach Anspruch 1 oder 2, **dadurch gekennzeichnet, dass** weiterhin eine oder mehrere der folgenden Eigenschaften ermittelt werden:
eine Talbreite (T1, T2), eine Wellenbreite (W1, W2), eine Wellenhöhe (Wh1, Wh2), ein Innendurchmesser (ID), ein Außendurchmesser (AD), ein Brechungsindex des Materials des Wellrohrs (8).

4. Verfahren nach einem der vorherigen Ansprüche, **dadurch gekennzeichnet, dass** die ermittelten Schichtdicken (WDI, WDA, TD, WH1, WH) mit Vergleichswerten verglichen werden und bei Ermittlung einer Abweichung von Grenzwerten ein Fehlersignal ausgegeben wird.

5. Verfahren nach einem der vorherigen Ansprüche, **dadurch gekennzeichnet, dass** mindestens zwei Wellrohre (8-1, 8-2) durch dieselbe THz-Messvorrichtung (1) transportiert und vermessen werden, wobei jeweils die ein oder mehreren Eigenschaft(en) der durch den Messraum (9) entlang der Förderrichtung (F) geförderten Wellrohre (8-1, 8-2) ermittelt werden,
wobei die Messabstände (L) der Transceiver-Einheiten (2) gegenüber der Symmetrieachse (A) zwischen den Messungen der zwei Wellrohre (8-1, 8-2) und in den Messungen nicht verändert werden,
wobei ein kleineres erstes Wellrohr (8-1) einen kleineren ersten Durchmesser (D1), kleinere erste Talbreite (T1), kleinere erste Wellenbreite (W1) und kleinere erste Wellenhöhe (Wh) aufweist als ein grö-ßeres zweites Wellrohr (8-2).

6. Verfahren nach einem der vorherigen Ansprüche, **dadurch gekennzeichnet, dass** Wellrohre (8, 8-1, 8-2) mit folgenden Dimensionierungen vermessen werden:
Innendurchmesser von größer/gleich 150 mm, insbesondere 500mm, Außendurchmesser 1.200 mm bis 1.800 mm,
vorzugsweise mit Wellenbreiten von 25mm bis 180mm und/oder Talbreiten von 10mm bis 60mm.

7. Verfahren nach einem der vorherigen Ansprüche, **dadurch gekennzeichnet, dass** mehrere Transceiver-Einheiten (2) vorgesehen sind, die starr um den Messraum und/oder das Wellrohr angeordnet und während der Vermessung des Wellrohrs (8, 8-1, 8-2) nicht gegenüber dem Wellrohr und/oder einem Gehäuse (20) der THz-Messvorrichtung (1) verstellt werden, insbesondere für eine vollumfängliche Vermessung des Wellrohrs (8, 8-1, 8-2).

8. Verfahren nach einem der Ansprüche 1 bis 6, **dadurch gekennzeichnet, dass** während der Vermessung des Wellrohrs (8, 8-1, 8-2) die mindestens eine Transceiver-Einheit (2) in Umfangsrichtung um die Symmetrieachse (A) rotiert oder reversiert, bei festem Messabstand (L).

9. THz-Messvorrichtung (1) zum Vermessen von Wellrohren (8, 8-1, 8-2), wobei die THz-Messvorrichtung (1) aufweist:
- mindestens eine Transceiver-Einheit (2), die einen THz-Transceiver (3) und eine Linse (4) zum Bündeln einer von dem THz-Transceiver (3) ausgesandten THz-Strahlung (5) und Detektieren von reflektierter Strahlung (7) aufweist,
- ein Gehäuse (20), das einen Messraum (21) zur Aufnahme der Wellrohre (8, 8-1, 8-2) mit einer Symmetrieachse (A) umgibt,
wobei die Transceiver-Einheit (2) an dem Gehäuse (20) fest oder verstellbar mit einem festen Messabstand (L) zu der Symmetrieachse (A).angeordnet ist, und die Transceiver-Einheit (2) weiterhin ausgebildet ist, die THz-Strahlung (5) entlang einer optischen Achse (B) auszugeben, reflektierte Strahlung (7) aufzunehmen und ein Messsignal (Si) auszubilden,
- eine Steuereinrichtung (30), die ausgebildet ist, das mindestens eine Messsignal (Si) der mindestens einen Transceiver-Einheit (2) als Funktion der Zeit (t) aufzunehmen und aus dem mindestens einen Messsignal (Si) Schichtdicken (WDI, WDA, TD, WH1, WH) der Wellen (10) und Täler (11) des durch den Messraum (9) entlang der Förderrichtung (F) geförderten Wellrohrs (8, 8-1, 8-2) zu ermitteln,
- wobei die Transceiver-Einheit (2) derartig ausgebildet und angeordnet ist, dass sie die THz-Strahlung (5) als konvergentes Strahlenbündel (15) ausgibt mit einer Brennweite (f), die kleiner ist als der Messabstand (L) der Transceiver-Einheit (2) zu der Symmetrieachse (A).

10. THz-Messvorrichtung (1) nach Anspruch 9, **dadurch gekennzeichnet, dass** die Steuereinrichtung ausgebildet ist, eine mehrere der folgenden Schichtdicken (WDI, WDA, TD, WH1, WH) zu ermitteln:
eine Talwanddicke (TD) der Täler (11) des Wellrohrs (8)
eine Wellenaußenwanddicke (WDA) oder Wellenwanddicke der Wellen (10) des Wellrohrs (8)
eine Welleninnenwanddicke (WDI) der Wellen (10) des Wellrohrs (8) eine Wellenhöhe (WH) der Wellen (10 gegenüber den Tälern (11).

11. THz-Messvorrichtung (1) nach Anspruch 9 oder 10, **dadurch gekennzeichnet, dass**
- ein Verhältnis von Brennweite (f) zu Messabstand (L) im Bereich von mindestens 60 Prozent, vorzugsweise mindestens 75 Prozent, insbesondere mindestens 80 Prozent liegt, und/oder
- ein Konvergenzwinkel (α) von 1 Grad bis 5 Grad, z.B. 1 Grad bis 4 Grad, vorzugsweise 1.5 Grad bis 3 Grad, z.B. im Bereich von 1.8 bis 2.3 Grad ausgebildet wird.

12. THz-Messvorrichtung (1) nach einem der vorherigen Ansprüche,
**dadurch gekennzeichnet, dass** mehrere Transceiver-Einheiten (2) an dem gemeinsamen Gehäuse (20) in Umfangsrichtung um den Messraum (9) starr angeordnet und jeweils mit ihren optischen Achsen (B) auf die gemeinsame Symmetrieachse (A) ausgerichtet sind, insbesondere zur vollumfänglichen Vermessung eines aufgenommenen Wellrohrs (8, 8-1, 8-2) in einer gemeinsamen Messebene, wobei die mehreren Transceiver-Einheiten (2) eine gleiche Brennweite (F) aufweisen, vorzugsweise als identische Transceiver-Einheiten (2) ausgebildet sind,
wobei eine gemeinsame Steuereinrichtung (30) zur Aufnahme der Messsignale (Si) und Ermittlung der mindestens einen Eigenschaft vorgesehen ist.

13. THz-Messvorrichtung (1) nach einem der Ansprüche 9 bis 12,
**dadurch gekennzeichnet, dass** die Linse (4) der mindestens einen Transceiver-Einheit (2) aus einem Material mit einem Brechungsindex (n4) für die THz-Strahlung (5) von größer als 1.7, z.B. in einem Bereich von 1.7 bis 2.1, insbesondere 1.7 bis 2.0, vorzugsweise 1.8 bis 2.0, vorgesehen ist, in dem Frequenzbereich der ausgesandten THz-Strahlung.

14. THz-Messvorrichtung (1) nach einem der Ansprüche 9 bis 13,
**dadurch gekennzeichnet, dass** die Linse (4) einteilig mit konvexer Außenfläche und aus einem einheitlichen Material, z.B. einem Siliziumdioxid-haltigen Material, insbesondere Glas-Quarz, ausgebildet ist.

15. THz-Messvorrichtung (1) nach einem der Ansprüche 9 bis 14,
**dadurch gekennzeichnet, dass**
die THz-Strahlung (5) im Bereich von Gigahertz und/oder Terahertz-Strahlung,
insbesondere im Frequenzbereich von 10 GHz bis 50 THz, insbesondere 50 GHz bis 10 THz, z.B. 50 GHz bis 4 THz liegt,
wobei der THz-Transceiver (3) ausgebildet ist, die THz-Strahlung (5) zeitlich kontinuierlich und/oder frequenzmoduliert und/oder gepulst auszugeben, insbesondere als FCMW-Radar.

16. THz-Messvorrichtung (1) nach einem der Ansprüche 9 bis 15,
**dadurch gekennzeichnet, dass** die Steuereinrichtung (30) eine Struktur eines aufgenommenen Wellrohrs (8, 8-1, 8-2) in der Messebene senkrecht zur Symmetrieachse (A) eines oder mehrere der folgenden Elemente erkennt:
eine Welle (10),
ein Tal (11),
ein Fitting, insbesondere als Aufnahme einer Ringdichtung, oder
eine Außenmuffe.

17. THz-Messvorrichtung (1) nach einen der Ansprüche 9 bis 16, **dadurch gekennzeichnet, dass** das Strahlenbündel (15) und die Steuereinrichtung (30) ausgebildet sind,
mindestens ein kleineres erstes Wellrohr (8-1) mit kleinerem ersten Durchmesser (D1), kleinerer erster Talbreite (T1), kleinerer erster Wellenbreite (W1) und kleinerer erster Wellenhöhe (Wh), und
ein größeres zweites Wellrohr (8-2) mit größerem zweiten Durchmesser (D2), größerer zweiten Talbreite (T2), größerer zweiter Wellenbreite (W2) und größerer zweiter Wellenhöhe (Wh) zu vermessen und zu bestimmen,
bei festem Messabstand (L) der Transceiver-Einheit (2) gegenüber der Symmetrieachse (A) in beiden Messungen.

18. Anordnung aus einer THz-Messvorrichtung (1) nach einem der Ansprüche 9 bis 17 und dem aufgenommenen Wellrohr (8, 8-1, 8-2).

19. Verfahren zur Herstellung eines Wellrohrs (8, 8-1, 8-2), bei dem
- das Wellrohr extrudiert und durch einen Corrugator mit Wellen (10) und Tälern (11) ausgebildet wird,
- das Wellrohr nachfolgend durch ein Verfahren nach einem der Ansprüche 1 bis 8 und/oder durch eine THz-Messvorrichtung (1) nach einem der Ansprüche 9 bis 17 vermessen wird und
- die Ansteuerung des Extruders und/oder Corrugators in Abhängigkeit der durch die Vermessung ermittelten Werte geregelt wird.
